# EUROPEAN PATENT SPECIFICATION

(11) **EP 4 389 363 B1**
(45) Date of publication and mention of the grant of the patent: **03.12.2025**
(21) Application number: 23216726.2
(22) Date of filing: 14.12.2023
(51) Int. Cl.: B25J 9/04, B25J 18/00

(54) **ROBOT**
ROBOTER
ROBOT

(30) Priority: 21.12.2022 JP 2022204296
(43) Date of publication of application: 26.06.2024
(73) Proprietor: Seiko Epson Corporation, Tokyo 160-8801 (JP)
(72) Inventor: KIKUCHI, Takayuki, Suwa-shi, Nagano, 392-8502 (JP); NAKANISHI, Daisuke, Suwa-shi, Nagano, 392-8502 (JP); NAGAMATSU, Shoichi, Suwa-shi, Nagano, 392-8502 (JP)
(74) Representative: MERH-IP Matias Erny Reichl Hoffmann Patentanwälte PartG mbB

(56) References cited:
- WO-A1-2019/037364
- US-A1- 2016 184 986
- US-B2- 10 456 931

## Description

The present application is based on, and claims priority from JP Application Serial Number 2022-204296, filed December 21, 2022.

### BACKGROUND

### 1. Technical Field

The present disclosure relates to a robot.

### 2. Related Art

For example, a robot including a base, a first arm coupled to the base rotatably around a first rotation axis, a second arm coupled to the first arm rotatably around a second rotation axis parallel to the first rotation axis, and a working head supported by the second arm is known. The first arm and the second arm form a robot arm. In the robot, in view of reduction of an inertia force of the robot arm for responding faster movement, suppression of power consumption, etc., weight reduction of the respective parts of the robot arm, particularly, weight reduction of the second arm is required.

JP-A-2020-142309 discloses a second arm having a structure in which a ball spline nut and a ball screw nut are not supported by a housing, but interior-finished and supported by a main frame and a sub-frame independently separated and placed and coupled via six pillars without side walls between the main frame and the sub-frame.

However, in the robot disclosed in JP-A-2020-142309, the weight reduction of the second arm is insufficient and a strength, particularly, rigidity in twist directions is insufficient. WO2019/037364A1 discloses a robot connecting arm that comprises an arm body, which has a first connecting end connected to a base and a second connecting end opposite the first connecting end. The size of the first connection end is larger than the size of the second connection end, so that the distance between the center of gravity of the arm body and the first connection end is smaller than the distance between the center of gravity and the second connection end.
US10456931B2 discloses a multi-axis industrial robot, in particular of a SCARA type. The multi-axis industrial robot comprises a base structure, a first arm pivotally connected to the base structure about a first axis of rotation, a second arm pivotally connected to said first arm about a second axis of rotation parallel to said first axis of rotation, and an operating unit carried by a shaft, which is mounted on said second arm and can be driven.

### SUMMARY

A robot according to the invention is defined by the features of independent claim 1. Preferred embodiments are defined by the dependent claims.

### BRIEF DESCRIPTION OF THE DRAWINGS

FIG. 1 is an overall view of a robot system according to a first embodiment of a robot of the present disclosure.
FIG. 2 is a perspective view of a base of a second arm of the robot shown in FIG. 1.
FIG. 3 is a view as seen from a direction of an arrow A in FIG. 2.
FIG. 4 is a view as seen from a direction of an arrow B in FIG. 2.

### DESCRIPTION OF EMBODIMENTS

As below, a robot of the present disclosure will be explained in detail based on embodiments shown in the accompanying drawings.

### First Embodiment

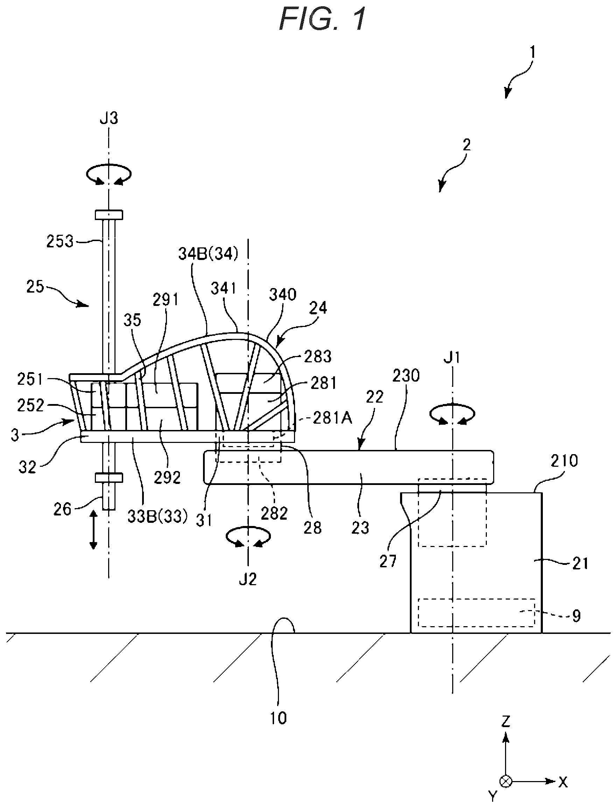

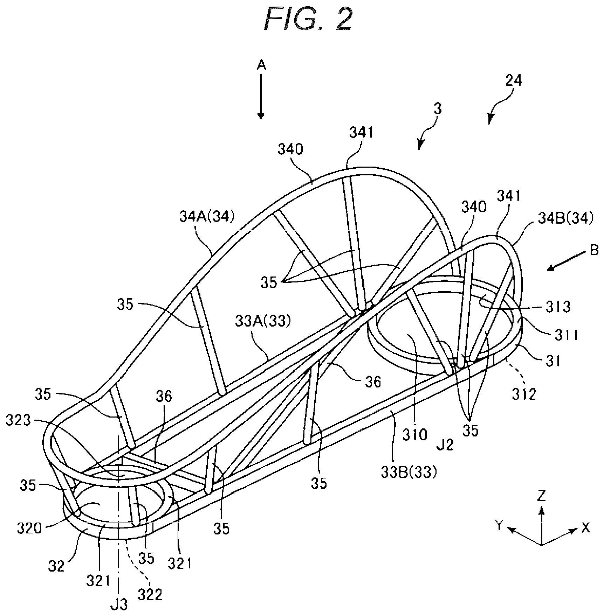

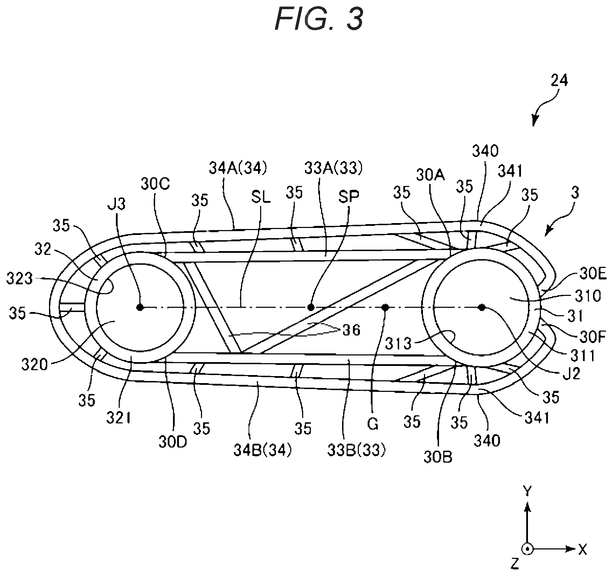

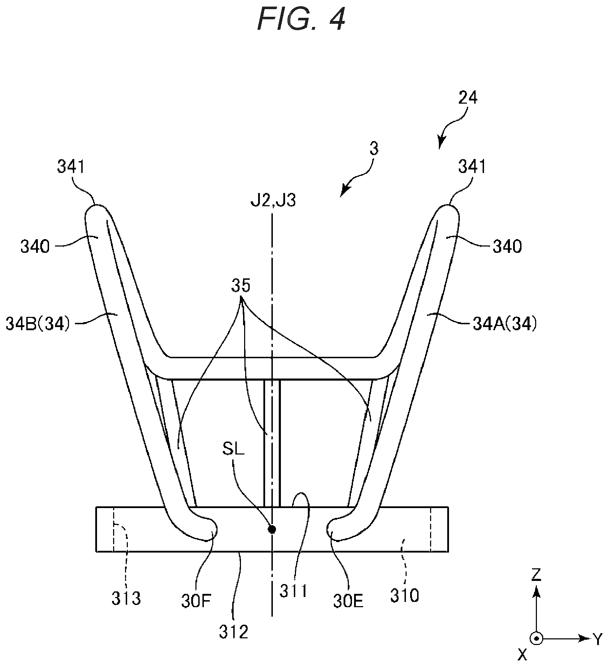

FIG. 1 is an overall view of a robot system according to a first embodiment of a robot of the present disclosure. FIG. 2 is a perspective view of a base of a second arm of the robot shown in FIG. 1. FIG. 3 is a view as seen from a direction of an arrow A (Z-axis direction) in FIG. 2. FIG. 4 is a view as seen from a direction of an arrow B (X-axis direction) in FIG. 2.

In FIG. 1, an X-axis, a Y-axis, and a Z-axis as three axes orthogonal to one another are set and the same three axes are respectively shown in FIGS. 2 to 4. Of the three axes, Z-axis directions show vertical directions and an XY-plane shows a horizontal plane.

Upward and downward directions in FIGS. 1, 2, and 4 are the same as the vertical directions. Upsides (+Z-axis sides) in FIGS. 1, 2, and 4 are also referred to as "upper" and downsides (-Z-axis sides) are also referred to as "lower". Regarding a robot arm 22, a first arm 23, a second arm 24, etc., right sides (+X-axis sides) in FIGS. 1, 2, and 3 are referred to as "proximal ends" or "proximal end portions" and left sides (-X-axis sides) are referred to as "distal ends" or "distal end portions".

In the specification, "vertical" includes not only a case aligned with vertical but also cases slightly inclined within e.g., ±10° relative to vertical. Further, in the specification, "parallel" includes not only a case where two objects are in parallel but also cases where two objects are slightly inclined within e.g., ±10° from parallel.

A robot system 1 shown in FIG. 1 includes a robot 2 and a robot control apparatus 9 controlling driving of the robot 2.

The robot 2 in the embodiment is a scalar robot, i.e., a horizontal articulated robot and used for various kinds of work (hereinafter, simply referred to as "work") e.g., holding, transportation, assembly, processing, and inspection of workpieces including electronic components. Note that the application of the robot 2 is not particularly limited. Further, the robot of the present disclosure may be another than the scalar robot, e.g., a six-axis articulated robot, a dual-arm robot, or the like.

As shown in FIG. 1, the robot 2 includes a base 21, the robot arm 22 rotatably coupled to the base 21. The base 21 is fixed to a floor surface 10 parallel to a horizontal plane. Inside of the base 21, the robot control apparatus 9 is placed. Note that, unlike the illustrated configuration, the robot control apparatus 9 may be placed outside of the base 21.

The robot arm 22 includes the first arm 23 having a proximal end portion coupled to the base 21 and rotating around a first rotation axis J1 along vertical directions relative to the base 21 and the second arm 24 having a proximal end portion coupled to a distal end portion of the first arm 23 and rotating around a second rotation axis J2 along the vertical directions relative to the first arm 23. The first arm 23 rotates within a predetermined angle range around the first rotation axis J1 within a horizontal plane and the second arm 24 rotates within a predetermined angle range around the second rotation axis J2 within a horizontal plane above the first arm 23.

A working head 25 is provided in a distal end portion of the second arm 24. The working head 25 has a spline nut 251 and a ball screw nut 252 coaxially placed with each other in the distal end portion of the second arm 24 and a spline shaft 253 inserted into the spline nut 251 and the ball screw nut 252. The spline nut 251 is located in the upper part of the ball screw nut 252 and fixed relative to the ball screw nut 252. The spline shaft 253 is rotatable around a third rotation axis J3 as a center axis thereof along the vertical directions and movable in upward and downward directions along the third rotation axis J3 relative to the second arm 24.

An end effector 26 is attached to a lower end portion of the spline shaft 253. The end effector 26 is detachable and one suitable for intended work is appropriately selected. The end effector 26 includes e.g., a hand gripping a workpiece as an object to be assembled or processed, a tool for chucking, drilling, grinding, polishing, or the like, and a painting tool such as a spray gun.

The robot 2 includes a first joint actuator 27 as a joint portion coupling the base 21 and the first arm 23 and rotating the first arm 23 around the first rotation axis J1 relative to the base 21, and a second joint actuator 28 as a joint portion coupling the first arm 23 and the second arm 24 and rotating the second arm 24 around the second rotation axis J2 relative to the first arm 23.

The first arm 23 is coupled to the base 21 at a predetermined distance apart from an upper surface 210 of the base 21 by the first joint actuator 27. The second arm 24 is coupled to the first arm 23 at a predetermined distance apart from an upper surface 230 of the first arm 23 by the second joint actuator 28.

Further, the robot 2 includes a first drive mechanism 291 rotating the spline nut 251 to rotate the spline shaft 253 around the third rotation axis J3, and a second drive mechanism 292 rotating the ball screw nut 252 to move the spline shaft 253 upward and downward in directions along the third rotation axis J3. The spline shaft 253 rotates in a predetermined direction around the third rotation axis J3 by actuation of the first drive mechanism 291, and the end effector 26 rotates in the same direction with the rotation. The spline shaft 253 moves in an axial direction of the third rotation axis J3 by actuation of the second drive mechanism 292, and the end effector 26 moves in the same direction with the movement, that is, moves upward or downward.

The first joint actuator 27, the second joint actuator 28, the first drive mechanism 291, and the second drive mechanism 292 respectively have motors, reducers, encoders, etc. The respective motors and the respective encoders are respectively electrically coupled to the robot control apparatus 9. The respective encoders detect rotation position information of the corresponding motors and transmit the information to the robot control apparatus 9. The robot control apparatus 9 controls energization conditions of the respective motors via motor drivers (not shown) based on the rotation position information of the respective motors received from the respective encoders. Thereby, the first arm 23, the second arm 24, and the spline shaft 253 are respectively actuated, and the attitude of the robot arm 22 changes over time according to a predetermined program and desired work may be performed.

Hereinafter, the motor of the second joint actuator 28 is referred to as "motor 281", the reducer of the second joint actuator 28 is referred to as "reducer 282", and the encoder of the second joint actuator 28 is referred to as "encoder 283".

As shown in FIG. 1, the reducer 282, the motor 281, and the encoder 283 are sequentially arranged from the downside to the upside, i.e., in the +Z-axis direction and coupled. The motor 281 and the encoder 283 are placed in a first placement portion 31, which will be described later. The motor 281 has an output shaft 281A at the -Z-axis side. The reducer 282 is fixed to the output shaft 281A and fixed to the first arm 23.

Next, a structure of the second arm 24 will be explained.

As shown in FIGS. 1 to 4, the second arm 24 has a base 3 including a frame-shaped member forming a basic skeleton of the second arm 24. The base 3 has a function of supporting and protecting mounted objects mounted on the second arm 24 including the above described second joint actuator 28, first drive mechanism 291, and second drive mechanism 292 (hereinafter, also simply referred to as "mounted objects").

As shown in FIG. 2, the base 3 is formed by the frame-shaped member having the first placement portion 31, a second placement portion 32, first beams 33, second beams 34, third beams 35, and fourth beams 36 appropriately combined into a desired three-dimensional shape. The base 3 is the frame-shaped member, and thereby, the weight of the second arm 24 may be made lighter than that of a plate-shaped base in related art. Even when the base 3 is the frame-shaped member, a sufficient strength may be secured for the following reasons. As below, the reasons will be specifically explained.

The first placement portion 31 and the second placement portion 32 are placed apart along the X-axis directions. The first placement portion 31 is located in a proximal end portion of the base 3 and includes a ring-shaped, particularly, a circular ring-shaped member having an insertion hole 310 inside. The insertion hole 310 includes a through hole formed in the center part of the first placement portion 31 and penetrating in the Z-axis directions. As seen from a direction of an arrow A in FIG. 2, the center of the insertion hole 310 is substantially equal to the center of the whole first placement portion 31 and coincides with the second rotation axis J2.

The first placement portion 31 has an upper surface 311, a lower surface 312, and an inner circumferential surface 313 of the insertion hole 310, and a shoulder portion of a motor case of the motor 281 forming the second joint actuator 28 is in direct or indirect contact with the upper surface 311 and the inner circumferential surface 313. For example, the motor 281 is fixed with the shoulder portion of the motor case fitted in the insertion hole 310. Further, the output shaft 281A of the motor 281 is inserted into the insertion hole 310 without contact with the inner circumferential surface 313 and fixed to an input shaft (not shown) of the reducer 282.

The first placement portion 31 is formed by the ring-shaped member, particularly, the circular ring-shaped member, and thereby, first, the strength of the first placement portion 31 may be increased. Especially, the first placement portion 31 holding the second joint actuator 28 having a considerably heavy weight may counter forces including inertia forces, centrifugal forces, and impact forces received from the respective directions on the horizontal plane with the actuation of the robot arm 22 by the sufficient strength. Second, the motor 281 forming the second joint actuator 28 may be properly held by a force equal over the entire circumference and the second joint actuator 28 may be stably supported regardless of whether the robot arm 22 is actuated or stopped.

The first placement portion 31 in the embodiment has an inner edge and an outer edge in circular shapes. Note that the portion is not limited to the configuration. For example, at least one of the inner edge and the outer edge may have an oval shape or a polygonal shape such as a rectangular shape.

The first placement portion 31 is not limited to the above described configuration, but may be e.g., an arc-shaped member with a part of the ring shape cut out, or all or part thereof may be a plate-shaped member, a bar-shaped member, or a net-shaped member. Further, the first placement portion 31 may be formed by a solid body or a hollow body or the members may be appropriately combined.

The inner diameter of the insertion hole 310 of the first placement portion 31 in the embodiment is constant along the Z-axis directions. Note that the hole is not limited to the configuration, but the inner diameter of the insertion hole 310 may change in a stepwise manner or a continuous manner along the Z-axis directions. That is, the shape, dimensions, etc. of the inner circumferential surface 313 of the insertion hole 310 are appropriately determined according to the shape of the held motor case of the motor 281 or the like. When the inner diameter of the insertion hole 310 changes in a stepwise manner or a continuous manner along the Z-axis directions, that contributes to a strength increase of the first placement portion 31 itself and thus contributes to a strength increase of the whole base 3.

The second placement portion 32 is a portion located in a distal end portion of the base 3, into which the spline nut 251 and the ball screw nut 252 as supporting portions are placed and fixed. The second placement portion 32 includes a ring-shaped, particularly, a circular ring-shaped member having an insertion hole 320 inside. The insertion hole 320 includes a through hole formed in the center part of the second placement portion 32 and penetrating in the Z-axis directions. As seen from the direction of the arrow A, the center of the insertion hole 320 is substantially equal to the center of the whole second placement portion 32 and coincides with the third rotation axis J3.

The second placement portion 32 has an upper surface 321, a lower surface 322, and an inner circumferential surface 323 of the insertion hole 320, and a lower portion of the ball screw nut 252 is in direct or indirect contact with the upper surface 321 and fixed. Note that the lower portion of the ball screw nut 252 may be in contact with the inner circumferential surface 323. Further, the spline shaft 253 is inserted into the insertion hole 320 without contact with the inner circumferential surface 323.

The second placement portion 32 is formed by the ring-shaped member, particularly, the circular ring-shaped member, and thereby, first, the strength of the second placement portion 32 may be increased. Especially, the second placement portion 32 holding the working head 25 having a considerably heavy weight, the end effector 26 at the distal end side thereof, etc. may counter various external forces including inertia forces, centrifugal forces, and impact forces received from the respective directions on the horizontal plane and the Z-axis directions with the actuation of the robot arm 22 by the sufficient strength. Second, the ball screw nut 252 forming the supporting portion may be properly held over a wide range, and the working head 25 etc. may be stably supported regardless of whether the robot arm 22 is actuated or stopped. Therefore, the spline shaft 253 may be stably rotated and moved upward and downward without wobbling or the like.

Both the first placement portion 31 and the second placement portion 32 are formed by the circular ring-shaped members, and thereby, the strength of a lower portion of the base 3 may be further increased.

Note that, unlike the illustrated configuration, the position relationship between the spline nut 251 and the ball screw nut 252 may be upside down. That is, the ball screw nut 252 may be fixed to the upper portion of the spline nut 251. In this case, the spline nut 251 is supported and fixed to the second placement portion 32 and, even in this case, the same effects as the above described first and second effects may be exerted.

The second placement portion 32 in the embodiment has an inner edge and an outer edge in circular shapes. Note that the portion is not limited to the configuration. For example, at least one of the inner edge and the outer edge may have an oval shape or a polygonal shape such as a rectangular shape.

The second placement portion 32 is not limited to the above described configuration, but may be e.g., an arc-shaped member with a part of the ring shape cut out, or all or part thereof may be a plate-shaped member, a bar-shaped or net-shaped member. Further, the second placement portion 32 may be formed by a solid member or a hollow member or the members may be appropriately combined.

The inner diameter of the insertion hole 320 of the second placement portion 32 in the embodiment is constant along the Z-axis directions. Note that the hole is not limited to the configuration, but the inner diameter of the insertion hole 320 may change in a stepwise manner or a continuous manner along the Z-axis directions. That is, the shape, dimensions, etc. of the inner circumferential surface 323 of the insertion hole 320 are appropriately determined according to the shape of the held ball screw nut 252 or the like. When the inner diameter of the insertion hole 320 changes in a stepwise manner or a continuous manner along the Z-axis directions, that contributes to a strength increase of the second placement portion 32 itself and thus contributes to a strength increase of the whole base 3.

In the embodiment, the outer diameter of the second placement portion 32 is smaller than the outer diameter of the first placement portion 31 and, accordingly, the inner diameter of the insertion hole 320 is smaller than the inner diameter of the insertion hole 310. Thereby, the shape of the part formed by the first placement portion 31, the second placement portion 32, and a pair of first beams 33A, 33B placed over these portions is a tapered shape from the proximal end toward the distal end, and the base 3 secures the sufficient strength and achieves an efficient weight distribution without excess as a whole. Note that the hole is not limited to that, but the inner diameter of the insertion hole 320 may be equal to or larger than the inner diameter of the insertion hole 310. Particularly, the pair of first beams 33A, 33B may be parallel.

A line segment connecting the center parts of the first placement portion 31 and the second placement portion 32, i.e., a line segment SL connecting the center of the insertion hole 310 and the center of the insertion hole 320 is parallel to the X-axis.

The first beams 33 are beams placed over between the first placement portion 31 and the second placement portion 32. That is, the first beams 33 couple the first placement portion 31 and the second placement portion 32 and fix the position relationship between the first placement portion 31 and the second placement portion 32. The first beams 33 serve to form the basic skeleton of the lower portion of the base 3 with the first placement portion 31 and the second placement portion 32. The first beams 33 form bar shapes extending substantially along the X-axis directions and, in the embodiment, the first beams 33 are provided symmetrically with respect to the line segment SL as seen from the direction of the arrow A. Thereby, the strength of the base 3 may be increased.

In this specification, the first beam 33 located at the +Y-axis side of the line segment SL is referred to as "first beam 33A" and the first beam 33 located at the -Y-axis side of the line segment SL is referred to as "first beam 33B". Further, "the lower portion of the base 3" refers to a part formed by the first placement portion 31, the second placement portion 32, the first beam 33A, the first beam 33B, and the two fourth beams 36, which will be described later, located on the same horizontal plane.

The first beam 33A and the first beam 33B have linear shapes. The first beam 33A and the first beam 33B are inclined relative to the line segment SL to increase the separation distance from each other toward the +X-axis side.

In the embodiment, the first beam 33A and the first beam 33B are placed symmetrically with respect to the line segment SL as seen in the direction of the arrow A. Note that, not limited to those, but the first beam 33A and the first beam 33B may be asymmetrical with respect to the line segment SL.

The first beam 33A and the first placement portion 31, the first beam 33B and the first placement portion 31, the first beam 33A and the second placement portion 32, and the first beam 33B and the second placement portion 32 are respectively directly coupled. The coupling portions thereof may be joined and fixed by e.g., a method of welding, brazing such as soldering, bonding using adhesive agents, riveting, screwing, bolting, or the like or fixed via fixing members (not shown). Or, these may be indirectly coupled via other members, e.g., the third beams 35, the fourth beams 36, which will be described later, or any other coupling members.

Note that the first beams 33 are not limited to the illustrated linear shapes, but, for example, at least one of the first beam 33A and the first beam 33B may have one, two, or more portions curved or bent (hereinafter, represented by "curved") to project toward the +Z-axis side, the -Z-axis side, the +X-axis side, the -X-axis side, the +Y-axis side, or the -Y-axis side. For example, the first beam 33A and the first beam 33B may have portions curved to be closer or coupled to each other near the centers thereof in the longitudinal direction.

The first beams 33 may be in shapes having branch portions branched into a plurality of portions in the middle or near the end part thereof or shapes having crossing portions in which a plurality of wire materials cross. In these cases, the first beams 33 have one ends coupled to the second beams 34, the third beams 35, or the fourth beams 36 or coupled to the first placement portion 31 or the second placement portion 32 via the third beams 35 or the fourth beams 36.

Or, the first beam 33A and the first beam 33B may be curved to project in the same direction or projected to curve in opposite directions to each other.

As shown in FIG. 3, a coupling portion 30A between the first placement portion 31 and the first beam 33A is located at the -X-axis side and the +Y-axis side of the outer edge of the first placement portion 31. A coupling portion 30B between the first placement portion 31 and the first beam 33B is located at the -X-axis side and the -Y-axis side of the outer edge of the first placement portion 31.

As described above, the first beam 33A and the first beam 33B are coupled to different positions of the first placement portion 31, and thereby, the strength of the base 3 may be increased.

A coupling portion 30C between the second placement portion 32 and the first beam 33A is located at the +X-axis side and the +Y-axis side of the outer edge of the second placement portion 32. A coupling portion 30D between the second placement portion 32 and the first beam 33B is located at the +X-axis side and the -Y-axis side of the outer edge of the second placement portion 32.

As described above, the first beam 33A and the first beam 33B are coupled to different positions of the second placement portion 32, and thereby, the strength of the base 3 may be increased.

The second beams 34 are beams placed over between the first placement portion 31 and the second placement portion 32 in locations at the upside of the first beams 33. The second beams 34 have a function of increasing the strength of the base 3 and protecting the mounted objects on the second arm 24.

As shown in FIGS. 2 and 3, in the embodiment, the second beams 34 are formed by a single continuous wire material, one end portion and the other end portion of the wire material are respectively coupled to the same or different locations of the first placement portion 31, and the center part of the wire material in the longitudinal direction has a shape folded back in a position slightly over the second placement portion 32 at the -X-axis side as seen from the Z-axis direction.

The second beams 34 form arch shapes curving and projecting toward the axial direction of the second rotation axis J2, i.e., the +Z-axis side relative to the first beam 33A and the first beam 33B. In other words, the second beams 34 have projecting portions 340 projecting toward the +Z-axis side relative to the first beam 33A and the first beam 33B.

In this specification, of the second beams 34, the part located at the +Y-side of the line segment SL as seen from the direction of the arrow A is referred to as "second beam 34A" and the part located at the -Y-side of the line segment SL is referred to as "second beam 34B". In other words, as seen from the direction of the arrow A, the second beam 34A and the second beam 34B are symmetrically provided with respect to the line segment SL. According to the configuration, the strength of the base 3 may be increased.

In the embodiment, the second beam 34A and the second beam 34B have shapes symmetrical with respect to the line segment SL as seen in the direction of the arrow A. Note that, not limited to those, but the second beam 34A and the second beam 34B may be asymmetrical with respect to the line segment SL.

As shown in FIG. 3, a center of gravity G of the base 3 is eccentrically located closer to the first placement portion 31 side than the second placement portion 32. That is, the center of gravity G of the base 3 is located at the proximal end side (+X-axis side) of a midpoint SP of the line segment SL as seen from the direction of the arrow A. Thereby, the weight of the part at the distal end side (-X-axis side) may be made lighter than that of the part at the proximal end side (+X-axis side) of the second arm 24. As a result, an inertia force (inertia) of the rotation of the second arm 24 around the second rotation axis J2 may be reduced. That is, the rotation speed of the second arm 24 may be made higher and work may be performed more quickly or energy necessary for the rotational driving of the second arm 24 may be reduced.

Top parts 341 of the projecting portions 340 of the second beam 34A and the second beam 34B are located at heights to surround to house the mounted objects inside of the projecting portions 340 and protect the mounted objects in good condition. The respective top parts 341 are in the same position in the X-axis directions.

As shown in FIG. 3, the respective top parts 341 of the second beam 34A and the second beam 34B are eccentrically located closer to the first placement portion 31 side than the second placement portion 32. That is, the respective top parts 341 are located at the proximal end side (+X-axis side) of the midpoint SP of the line segment SL as seen from the direction of the arrow A.

There is a tendency that a larger mounted object, i.e., a mounted object having a larger height in the Z-axis directions, having a larger width in the Y-axis directions, or having both is placed in the position eccentrically located at the +X-axis side of the base 3. In the embodiment, the mounted object is the second joint actuator 28. The respective top parts 341 are eccentrically located closer to the first placement portion 31 side than the second placement portion 32, and thereby, even the larger mounted object may be surrounded to be reliably housed between the projecting portions 340 and protected.

In the second beam 34A and the second beam 34B, the parts at the proximal end side (+X-axis side) of the top parts 341 of the projecting portions 340 have larger degrees of curves, i.e., average values of curvature of the curves than the parts at the distal end side (-X-axis side) of the top parts 341 of the projecting portions 340. Note that the parts are not limited to the configurations. The parts at the proximal end side of the top parts 341 of the projecting portions 340 and the parts at the distal end side of the top parts 341 of the projecting portions 340 may have the same average values of curvature of the curves or at least ones may have linear shapes.

As shown in FIGS. 2 and 4, the respective projecting portions 340 of the second beams 34A and 34B have shapes at a larger separation distance from each other as the portions are separated from the first beams 33A and 33B, that is, the positions in the Z-axis directions are closer toward the +Z-axis side. Thereby, larger mounted objects, e.g., the motor 281, the encoder 283, etc. may be housed and placed between the second beam 34A and the second beam 34B, particularly, in the upside space between the projecting portions 340 thereof, and the larger mounted objects may be sufficiently protected. As described above, directions in which the second arm 24 extends are along the X-axis and directions perpendicular to the X-axis within the plane in which the first arm 23 and the second arm 24 rotate are along the Y-axis. In this regard, the top parts 341 are the largest in the distance between the pair of projecting portions 340 along the Y-axis.

As described above, when the larger mounted object and the heavier mounted object are mounted at the proximal end side of the second arm 24, the weight of the part at the distal end side may be made lighter than that of the part at the proximal end side of the second arm 24. As a result, an inertia force (inertia) of the rotation of the second arm 24 around the second rotation axis J2 may be reduced. That is, the rotation speed of the second arm 24 may be made higher and work may be performed more quickly or energy necessary for the rotational driving of the second arm 24 may be reduced.

The second beam 34A and the first placement portion 31 and the second beam 34B the and first placement portion 31 are respectively directly coupled. The coupling portions thereof may be joined and fixed by e.g., a method of welding, brazing such as soldering, bonding using adhesive agents, riveting, screwing, bolting, or the like or fixed via fixing members (not shown). Or, these may be indirectly coupled via other members, e.g., the third beams 35, the fourth beams 36, which will be described later, or any other coupling members.

As shown in FIG. 3, a coupling portion 30E between the first placement portion 31 and the second beam 34A is located at the +X-axis side and the +Y-axis side of the outer edge of the first placement portion 31. A coupling portion 30F between the first placement portion 31 and the second beam 34B is located at the +X-axis side and the -Y-axis side of the outer edge of the first placement portion 31.

As described above, the proximal end of the second beam 34A and the proximal end of the second beam 34B are coupled to the different positions of the first placement portion 31, and thereby, the strength of the base 3 may be increased. Note that, unlike the illustrated configuration, the proximal end of the second beam 34A and the proximal end of the second beam 34B may be coupled to the same position of the first placement portion 31.

The second beams 34 may be in shapes having branch portions branched into a plurality of portions in the middle or near the end part thereof or shapes having crossing portions in which a plurality of wire materials cross. In these cases, the second beams 34 may have one ends coupled to the first beams 33, the third beams 35, or the fourth beams 36 or coupled to the first placement portion 31 or the first beams 33 via the third beams 35 or the fourth beams 36.

The third beams 35 reinforce the second beams 34. That is, by provision of the third beams 35, the curved shapes of the whole second beams 34, particularly, the shapes of the projecting portions 340 may be held more reliably against various external forces applied to the base 3. Thereby, the strength of the second beams 34 and thus the strength of the whole base 3 may be sufficiently increased. In the illustrated configuration, the third beams 35 extend substantially in the Z-axis directions or directions slightly inclined relative to the Z-axis and have substantially linear shapes. Further, in the illustrated configuration, 13 of the third beams 35 are provided. The third beams 35 include the beams coupling the first placement portion 31 and the second beams 34, the beams coupling the first beams 33 and the second beams 34, and the beams coupling the second placement portion 32 and the second beams 34. As described above, the third beams 35 couple the second beams 34 and counterpart members such as the first placement portion 31, the second placement portion 32, or the first beams 33, and have a function of reinforcing not only the second beams 34 but also the counterpart members. That is, by provision of the respective third beams 35, the strength of the whole base 3 may be sufficiently secured.

Note that the conditions of the dimensions including lengths and diameters, placements, coupling locations, the provided number, etc. of the third beams 35 are not limited to those of the illustrated configuration.

As shown in FIG. 3, the lower ends of the third beams 35 coupling the second placement portion 32 and the second beams 34 are located in parts different from the coupling portion 30C and the coupling portion 30D. Thereby, the upside spaces of the coupling portion 30C and the coupling portion 30D may be secured and the strength of the base 3 may be sufficiently obtained. Note that the lower ends of the third beams 35 may be coupled to the coupling portion 30C and the coupling portion 30D.

The three third beams 35 coupling the parts near the coupling portion 30A between the first placement portion 31 and the first beam 33A and the projecting portion 340 of the second beam 34A are provided. These three third beams 35 are at different angles relative to the Z-axis in the longitudinal direction, and the upper end of the middle third beam 35 of the three is coupled to near the top part 341 of the second beam 34A.

On the other hand, the three third beams 35 coupling the parts near the coupling portion 30B between the first placement portion 31 and the first beam 33B and the projecting portion 340 of the second beam 34B are provided. These three third beams 35 are at different angles relative to the Z-axis in the longitudinal direction, and the upper end of the middle third beam 35 of the three is coupled to near the top part 341 of the second beam 34B.

According to the configuration, of the second beams 34, the strengths of the projecting portions 340 requiring higher strengths, particularly, near the top parts 341 may be increased, and deformation of the second beams 34 when subjected to external forces and thus deformation of the whole base 3 may be prevented or suppressed more effectively. As a result, the mounted objects, particularly, the mounted objects in the first placement portion 31 may be sufficiently protected.

Note that the third beams 35 are not limited to the illustrated linear shapes, but may have e.g., one, two, or more portions curved to project in the X-axis directions or the Y-axis directions.

Further, the third beams 35 may be in shapes having branch portions branched into a plurality of portions in the middle or near the end part thereof or shapes having crossing portions in which a plurality of wire materials cross. In these cases, the third beams 35 may have one ends coupled to other third beams 35 or the fourth beams 36 or coupled to the first placement portion 31, the second placement portion 32, or the first beams 33 via the other third beams 35 or the fourth beams 36.

Between the first beams 33 and the second beams 34, in place of the third beams 35, other coupling members coupling the first beams 33 and the second beams 34 may be provided. The coupling members include e.g., grid-like members, net-like members, honeycomb structures, porous structures, and plate-like members having a plurality of small holes or slits penetrating in plate thickness directions.

The fourth beams 36 couple the first beam 33A and the first beam 33B. By provision of the fourth beams 36, the strength of the lower portion of the base 3 may be increased and thus the strength of the whole base 3 may be increased. Two of the fourth beams 36 are provided in the illustrated configuration. Note that the conditions of the dimensions including lengths and diameters, placements, coupling locations, the provided number, etc. of the fourth beams 36 are not limited to those of the illustrated configuration.

Further, the fourth beams 36 have a function of mounting and fixing the mounted objects of the second arm 24, e.g., the first joint actuator 27 and the second joint actuator 28 onto the upper portions thereof. The fourth beams 36 have screw holes or bolt holes (not shown) for fixing the first joint actuator 27, the second joint actuator 28, etc.

By the fourth beams 36, the strength of the whole base 3, particularly, the lower portion of the base 3 may be increased and the mounted objects may be supported more reliably. Particularly, when an external twisting force around the line segment SL is applied to the base 3, the strength against the force may be increased.

Note that the fourth beams 36 may be in shapes having branch portions branched into a plurality of portions in the middle or near the end part thereof or shapes having crossing portions in which a plurality of wire materials cross. Further, the fourth beams 36 may have one ends coupled to the first placement portion 31, the second placement portion 32, or the third beams 35.

The respective members of the first placement portion 31, the second placement portion 32, the first beams 33, the second beams 34, the third beams 35, and the fourth beams 36 may be respectively formed by solid bodies or hollow bodies. When the members are formed by solid bodies, the strengths of the members and the base 3 may be further increased. When the members are formed by hollow bodies, the strengths of the members and the whole base 3 may be sufficiently secured and the weight of the base 3 may be further reduced. Particularly, when all or part of the first beams 33 are formed by hollow bodies, the effects may be exerted more remarkably, and, when all or part of the second beams 34 are formed by hollow bodies, the effects may be exerted more remarkably.

As described above, the first beams 33 and the second beams 34 are formed by hollow bodies. Thereby, the strengths of the first beams 33 and the second beams 34 and the strength of the whole base 3 may be sufficiently secured and the weight of the base 3 may be further reduced.

Note that, though not illustrated, the robot 2 of the present disclosure may have at least one fifth beam coupling the first placement portion 31 or the second placement portion 32 and the first beam 33, at least one sixth beam coupling the second beam 34A and the second beam 34B, at least one seventh beam coupling the first beam 33A and the second beam 34B or the first beam 33B and the second beam 34A, at least one eighth beam coupling the third beams 35, the fourth beams 36, or the third beam 35 and the fourth beam 36, etc.

The constituent materials of the frame-shaped member forming the base 3 or the first placement portion 31, the second placement portion 32, the first beams 33, the second beams 34, the third beams 35, the fourth beams 36, etc. as the respective configurations of the frame-shaped member are not particularly limited. Materials preferable for balance between the strength increase and the weight reduction of the base 3 may include e.g., various metal materials including iron and iron alloys such as stainless steel, aluminum or aluminum alloys, copper or copper alloys, titanium or titanium alloys, various ceramics materials, various resin materials (particularly, hard resin materials) including polyester such as polyethylene, polypropylene, polystyrene, and polyethylene terephthalate, acrylic resins such as polycarbonate and polymethylmethacrylate, polyamide, and fluorine resin, high-strength fibrous materials such as aramid, Kevlar (registered trademark), ZYLON (registered trademark), metal fiber, and carbon fiber or materials containing the high-strength fibrous materials (e.g., fiber-reinforced plastic), various ceramics materials, and various carbon materials. Or, composite materials formed by arbitrary combination of two or more of the materials may be used. All of the above described respective configurations may be formed using the same material or part of the configurations may be formed using other materials than those of the rest.

The frame-shaped member forming the base 3 or the respective configurations of the frame-shaped member may be in conditions in which residual stress generated at e.g., molding, processing, coupling by welding or the like, assembly, etc. remains or in conditions in which residual stress is removed or relaxed by e.g., thermal treatment. The former case is preferable because residual stress of compression is mainly left and the strength of the whole base 3 may be further increased. The latter case is preferable because residual stress of tension is mainly removed and the joint strength of the joint portions and the strength of the whole base 3 may be further increased. Further, for example, thermal treatment may be performed on the whole base 3, the whole second beams 34, or the projecting portions 340 to remove or relax residual stress of tension or bending left in the second beams 34, and thereby, the joint strengths of the coupling portions 30E, 30F, the joint strengths to the third beams 35, the strengths of the second beams 34 themselves, and thus, the strength of the whole base 3 may be further increased.

All or part of the respective configurations of the frame-shaped member forming the base 3, i.e., the first placement portion 31, the second placement portion 32, the first beams 33, the second beams 34, the third beams 35, the fourth beams 36, etc. may be integrally formed, not joined. Thereby, compared to a case where the configurations are joined, the strengths of the joint portions may be made higher. The frame-shaped member forming the base 3 or the configurations thereof may be manufactured through various methods including e.g., various kinds of cold or hot plastic forming such as milling, rolling, forging, press molding, compression molding, extrusion molding, tensile molding, wire drawing, drawing, spinning, and bending, casting, injection molding, hot isostatic pressing (HIP), cold isostatic pressing (CIP), cutting, grinding, shaving, electrical discharge machining, laser machining, casting, modeling using 3D printers, powder sintering, and metal injection molding (MIM) or methods formed by appropriate combination of the methods. Or, various dies for pressing, injection molding, etc. may be fabricated by modeling using 3D printers and the frame-shaped member or the respective configurations thereof may be manufactured using the dies.

As described above, the robot 2 includes the base 21, the first arm 23 coupled rotatably around the first rotation axis J1 relative to the base 21, the second arm 24 having the base 3 formed by the frame-shaped member and rotating around the second rotation axis J2 parallel to the first rotation axis J1 relative to the first arm 23, the spline shaft 253 as the shaft placed at the opposite side to the first arm 23 of the second arm 24, the second joint actuator 28 as the drive unit rotationally driving the second arm 24 around the second rotation axis J2 relative to the first arm 23, and the spline nut 251 and the ball screw nut 252 as supporting portions supporting the spline shaft 253 to rotate around the third rotation axis J3 parallel to the second rotation axis J2 and move along the axial direction of the third rotation axis J3. Further, the base 3 includes the first placement portion 31 in which the second joint actuator 28 is placed, the second placement portion 32 in which the spline nut 251 and the ball screw nut 252 are placed, the first beams 33 placed over between the first placement portion 31 and the second placement portion 32, and the second beams 34 placed over between the first placement portion 31 and the second placement portion 32 and having the projecting portions 340 projecting toward the axial direction of the second rotation axis J2. Thereby, the sufficient strength of the base 3, particularly, the strength in the direction twisting around the extension direction of the second arm 24 may be secured and the weight of the second arm 24 may be reduced. That is, the strength increase and the weight reduction of the base 3 may be balanced. As a result, when the robot 2 performs work, that contributes to an increase in work speed and power consumption saving.

Note that the second beams 34 may have shapes projecting toward the -Z-axis side.

Further, the first beams 33 are provided symmetrically with respect to the line segment SL connecting the center parts of the first placement portion 31 and the second placement portion 32. Thereby, the strength of the base 3 may be further increased.

The second beams 34 are provided symmetrically with respect to the line segment SL connecting the center parts of the first placement portion 31 and the second placement portion 32. Thereby, the strength of the base 3 may be further increased.

The separation distance between the respective projecting portions 340 of the pair of second beams 34 is larger as the portions are farther away from the first beams 33. That is, as described above, the directions in which the second arm 24 extends are along the X-axis and the directions perpendicular to the X-axis within the plane in which the first arm 23 and the second arm 24 rotate are along the Y-axis. Here, in the distance along the Y-axis between the pair of projecting portions 340, the top parts 341 are the largest. Thereby, the larger mounted objects and the heavier mounted objects may be housed and placed inside of the projecting portions 340 of the pair of second beams 34.

Note that the separation distance between the pair of second beams 34 may be smaller as the beams are farther away from the first beams 33, and the separation distance between the pair of second beams 34 may be the same regardless of the distances from the first beams 33.

The base 3 includes the third beams 35 reinforcing the second beams 34. Thereby, the strength of the base 3 may be further increased.

Note that the third beams 35 may be omitted.

The center of gravity G of the base 3 is eccentrically located closer to the first placement portion 31 side than the second placement portion 32. Thereby, the weight of the distal end side portion of the second arm 24 is made lighter than that of the proximal end side portion, and the inertia force of the rotation of the second arm 24 around the second rotation axis J2 may be reduced. That is, the rotation speed of the second arm 24 may be increased and the work may be performed more quickly, or the energy necessary for rotational driving of the second arm 24 may be reduced.

The center of gravity G of the base 3 may be eccentrically located closer to the second placement portion 32 side than the first placement portion 31, or located near the midway between the first placement portion 31 and the second placement portion 32, i.e., near the midpoint SP of the line segment SL.

The top parts 341 of the projecting portions 340 are eccentrically located closer to the first placement portion 31 side than the second placement portion 32. Thereby, even the larger mounted object, particularly, the second joint actuator 28 as the mounted object at the larger height in the Z-axis directions is placed at the proximal end side of the base 3, the second joint actuator 28 may be sufficiently housed and protected inside of the projecting portions 340 of the second beams 34. Accordingly, the weight of the distal end side portion of the second arm 24 is made lighter relative to the proximal end side portion, and the inertia force of the rotation of the second arm 24 around the second rotation axis J2 may be reduced. That is, the rotation speed of the second arm 24 may be increased and the work may be performed more quickly, or the energy necessary for rotational driving of the second arm 24 may be reduced.

The second arm 24 may have a cover (not shown) detachably attached to the base 3. When the cover is attached to the base 3, the base 3 and the mounted objects are covered by the cover and entry of dirt, dust, etc. is prevented. As the cover, e.g., a transparent or opaque plastic cover, i.e., a cover having a lighter weight and a sufficient strength may be used.

In the above described first embodiment, the cover is not attached to the base 3. Thereby, there are a first advantage that time and effort for attachment and detachment of the cover may be saved, a second advantage that the weight of the second arm 24 may be further reduced by the weight of the cover, and a third advantage that heat dissipation of the second arm 24, particularly, heat dissipation of the mounted objects of the second arm 24 is excellent.

Note that the above described configuration of the base 3 may be applied not only to the second arm 24 but also to the base of the first arm 23. Thereby, the weight of the whole robot arm 22 may be further reduced and that contributes to an increase in work speed and power consumption saving.

## Claims

1. A robot (2) comprising:
a base (21);
a first arm (22) coupled rotatably around a first rotation axis (J1) relative to the base;
a second arm (24) having a base (3) formed by a frame-shaped member and rotating around a second rotation axis (J2) parallel to the first rotation axis relative to the first arm;
a shaft (253) placed at an opposite side to the first arm of the second arm;
a drive unit (28) rotationally driving the second arm around the second rotation axis relative to the first arm; and
a supporting portion (251, 252) supporting the shaft to rotate around a third rotation axis (J3) parallel to the second rotation axis and move the shaft along an axial direction of the third rotation axis, wherein
the frame-shaped member has
a first placement portion (31) in which the drive unit is placed,
a second placement portion (32) in which the supporting portion is placed,
a pair of first beams (33A, 33B) placed over between the first placement portion and
the second placement portion, wherein, the first beams are connected to the first placement portion and the second placement portion,
**characterised in that** the robot comprises a second beam (34) placed over between the first placement portion and the second placement portion and having a pair of projecting portions (340) projecting toward a +Z-axis side relative to the first beams, wherein the second beam is connected to the first placement portion and the second placement portion.

2. The robot according to claim 1, wherein
the first beam is provided symmetrically with respect to a line segment connecting center parts of the first placement portion and the second placement portion.

3. The robot according to claim 1, wherein
the second beam is provided symmetrically with respect to a line segment connecting center parts of the first placement portion and the second placement portion.

4. The robot according to claim 3, wherein
a separation distance between the projecting portions along the Y-axis is larger as the portions are farther from the first beam.

5. The robot according to claim 1, wherein
the second beam respectively couples to the first placement portion, the second placement portion, and the first beams via a third beam (35).

6. The robot according to claim 1, wherein
a center of gravity of the base is eccentrically located closer to the first placement portion side than the second placement portion.

7. The robot according to claim 1, wherein
a top part (341) of the projecting portion is eccentrically located closer to the first placement portion side than the second placement portion,
wherein the top parts are located at heights to house a mounted object inside of the projecting portions.

8. The robot according to claim 1, wherein
the first beam and the second beam are formed by hollow bodies.

## Patentansprüche

1. Roboter (2), umfassend:
eine Basis (21);
einen ersten Arm (22), der drehbar um eine erste Drehachse (J1) relativ zu der Basis gekoppelt ist;
einen zweiten Arm (24) mit einer Basis (3), die durch ein rahmenförmiges Element gebildet ist und um eine zweite Drehachse (J2) parallel zu der ersten Drehachse relativ zu dem ersten Arm dreht;
eine Welle (253), die an einer entgegengesetzten Seite zu dem ersten Arms platziert ist, des zweiten Arms;
eine Antriebseinheit (28), die den zweite Arm um die zweite Drehachse relativ zu dem ersten Arm drehend antreibt; und
einen Stützabschnitt (251, 252), der die Welle stützt, so dass diese um eine dritte Drehachse (J3) parallel zu der zweiten Drehachse dreht, und die Welle entlang einer Achsrichtung der dritten Drehachse bewegt, wobei
das rahmenförmige Element aufweist
einen ersten Platzierungsabschnitt (31), in dem die Antriebseinheit platziert ist,
einen zweiten Platzierungsabschnitt (32), in dem der Stützabschnitt platziert ist,
ein Paar erster Balken (33A, 33B), das über und zwischen dem ersten Platzierungsabschnitt und dem zweiten Platzierungsabschnitt platziert ist, wobei die ersten Balken mit dem ersten Platzierungsabschnitt und dem zweiten Platzierungsabschnitt verbunden sind,
**dadurch gekennzeichnet, dass** der Roboter einen zweiten Balken (34) umfasst, der über und zwischen dem ersten Platzierungsabschnitt und dem zweiten Platzierungsabschnitt platziert ist und ein Paar vorstehender Abschnitte (340) aufweist, das zu einer Z-Achsenseite relativ zu den ersten Balken vorsteht, wobei der zweite Balken mit dem ersten Platzierungsabschnitt und dem zweiten Platzierungsabschnitt verbunden ist.

2. Roboter nach Anspruch 1, wobei
der erste Balken symmetrisch in Bezug auf ein Liniensegment bereitgestellt ist, das Mittelteile des ersten Platzierungsabschnitts und des zweiten Platzierungsabschnitts verbindet.

3. Roboter nach Anspruch 1, wobei
der zweite Balken symmetrisch in Bezug auf ein Liniensegment bereitgestellt ist, das Mittelteile des ersten Platzierungsabschnitts und des zweiten Platzierungsabschnitts verbindet.

4. Roboter nach Anspruch 3, wobei
eine Trennungsdistanz zwischen den vorstehenden Abschnitten entlang der Y-Achse größer ist, umso weiter die Abschnitte vom ersten Balken entfernt sind.

5. Roboter nach Anspruch 1, wobei
der zweite Balken mit dem ersten Platzierungsabschnitt, dem zweiten Platzierungsabschnitt und den ersten Balken über einen dritten Balken (35) gekoppelt ist.

6. Roboter nach Anspruch 1, wobei
ein Schwerpunkt der Basis exzentrisch näher bei der Seite des ersten Platzierungsabschnitts als bei dem zweiten Platzierungsabschnitt liegt.

7. Roboter nach Anspruch 1, wobei
ein oberer Teil (341) des vorstehenden Abschnitts exzentrisch näher bei der Seite des ersten Platzierungsabschnitts als bei dem zweiten Platzierungsabschnitt liegt,
wobei die oberen Teile in Höhen liegen, um ein montiertes Objekt im Inneren der vorstehenden Abschnitte aufzunehmen.

8. Roboter nach Anspruch 1, wobei
der erste Balken und der zweite Balken durch Hohlkörper gebildet sind.

## Revendications

1. Robot (2) comprenant :
une base (21) ;
un premier bras (22) accouplé de façon rotative autour d'un premier axe de rotation (J1) par rapport à la base ;
un deuxième bras (24) comportant une base (3) formée par un élément en forme de cadre et tournant autour d'un deuxième axe de rotation (J2) parallèle au premier axe de rotation par rapport au premier bras ;
un arbre (253) placé sur un côté opposé au premier bras du deuxième bras ;
une unité d'entraînement (28) entraînant le deuxième bras de façon rotative autour du deuxième axe de rotation par rapport au premier bras ; et
une partie de support (251, 252) supportant l'arbre de manière à tourner autour d'un troisième axe de rotation (J3) parallèle au deuxième axe de rotation et déplaçant l'arbre le long d'une direction axiale du troisième axe de rotation, dans lequel
l'élément en forme de cadre comporte
une première partie de placement (31) dans laquelle est placée l'unité d'entraînement,
une deuxième partie de placement (32) dans laquelle est placée la partie de support,
une paire de premières traverses (33A, 33B) placées au-dessus entre la première partie de placement et la deuxième partie de placement, dans lequel les premières traverses sont reliées à la première partie de placement et à la deuxième partie de placement,
**caractérisé en ce que** le robot comprend une deuxième traverse (34) placée au-dessus entre la première partie de placement et la deuxième partie de placement et comportant une paire de parties faisant saillie (340), lesquelles font saillie vers un côté axe +Z par rapport aux premières traverses, dans lequel la deuxième traverse est reliée à la première partie de placement et à la deuxième partie de placement.

2. Robot selon la revendication 1, dans lequel
la première traverse est disposée symétriquement par rapport à un segment de ligne reliant des parties centrales de la première partie de placement et de la deuxième partie de placement.

3. Robot selon la revendication 1, dans lequel
la deuxième traverse est disposée symétriquement par rapport à un segment de ligne reliant des parties centrales de la première partie de placement et de la deuxième partie de placement.

4. Robot selon la revendication 3, dans lequel
une distance de séparation entre les parties faisant saillie le long de l'axe Y est plus grande que l'éloignement entre les parties et la première traverse.

5. Robot selon la revendication 1, dans lequel la deuxième traverse s'accouple respectivement à la première partie de placement, à la deuxième partie de placement et aux premières traverses par le biais d'une troisième traverse (35).

6. Robot selon la revendication 1, dans lequel
un centre de gravité de la base est excentriquement plus proche du côté de la première partie de placement que de la deuxième partie de placement.

7. Robot selon la revendication 1, dans lequel
une partie la plus haute (341) de la partie faisant saillie est excentriquement plus proche du côté de la première partie de placement que de la deuxième partie de placement,
dans lequel les parties les plus hautes se trouvent à des hauteurs permettant de loger un objet monté à l'intérieur des parties faisant saillie.

8. Robot selon la revendication 1, dans lequel
la première traverse et la deuxième traverse sont constituées de corps creux.
